(19) Europäisches Patentamt
European Patent Office
Office européen des brevets

(11) EP 0 899 813 A2

(12) **EUROPÄISCHE PATENTANMELDUNG**

(43) Veröffentlichungstag:
**03.03.1999 Patentblatt 1999/09**

(51) Int. Cl.$^6$: **H01Q 3/26**, H04Q 7/36

(21) Anmeldenummer: **98114987.5**

(22) Anmeldetag: **11.08.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.08.1997 DE 19737822**

(71) Anmelder:
**SIEMENS AKTIENGESELLSCHAFT**
**80333 München (DE)**

(72) Erfinder: **Farsakh, Christof, Dr.**
**80799 München (DE)**

(54) **Verfahren zur Bestimmung einer Richtcharakteristik einer Funkstation und eine derartige Funkstation**

(57) Erfindungsgemäß ist der Funkstation eine Antenneneinrichtung zugeordnet, wobei die Antenneneinrichtung aus mehreren Einzelstrahlern besteht, über die Sendesignale entsprechend einer in Form und Leistung ausgeprägten Richtcharakteristik abgestrahlt werden. Damit sind Verbindungen zu weiteren Funkstationen durch räumliche Teilnehmerseparierung möglich. Zur Bestimmung der Richtcharakteristik werden:

- ein verbindungsspezifischer Gewichtseinheitsvektor für zumindest eine Verbindung bestimmt, der die Form der Richtcharakteristik beschreibt, wobei der verbindungsspezifische Gewichtseinheitsvektor einer Länge eins derart ermittelt wird, daß dessen Verwendung die durch diesen Gewichtseinheitsvektor erzeugte Empfangsleistung an der dieser Verbindung zugeordneten weiteren Funkstation maximiert,
- eine den Gewichtseinheitsvektor bewertende verbindungsspezifische Leistung für die Verbindung bestimmt, die bei der empfangenden Funkstation zu vorgegebenen Übertragungsbedingungen führt,
- ein individueller Gewichtsvektor durch Verknüpfung des Gewichtseinheitsvektors mit der Leistung bestimmt,
- Sendesignale mit dem Gewichtsvektor zu einzelstrahlerindividuellen Sendesignalen gewichtet, und
- die einzelstrahlerindividuellen Sendesignale über die Einzelstrahler abgestrahlt.

Das Strahlformungsproblem wird wesentlich vereinfacht und eine SDMA-Teilnehmerseparierung in Mobilfunknetzen realisierbar.

Fig.4

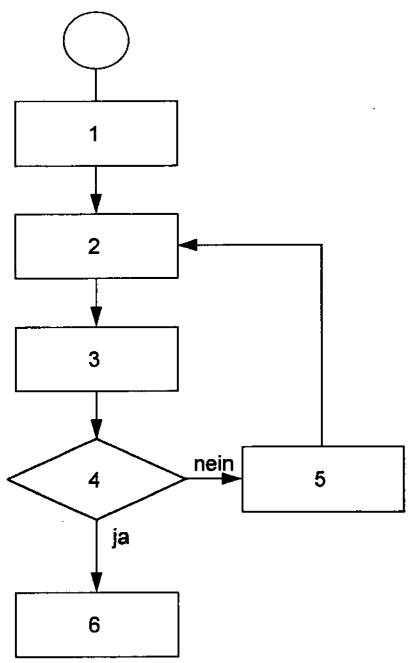




Printed by Xerox (UK) Business Services
2.16.7/3.6

## Beschreibung

Die Erfindung betrifft ein Verfahren zur Bestimmung einer Richtcharakteristik einer Funkstation und eine derartige Funkstation, insbesondere für Verbindungen zwischen Funkstationen in Mobilfunknetzen mit räumlicher Teilnehmerseparierung.

In Kommunikationssystemen, beispielsweise Mobilfunknetzen oder Systemen des drahtlosen Teilnehmeranschlusses sind Verfahren der räumlichen Teilnehmerseparierung beispielsweise aus DE 197 13 666 bekannt. In solchen SDMA (space division multiple access) Systemen können mehrere Kommunikationsverbindungen in einem gemeinsamen Kanal versorgt werden, wobei der Kanal durch ein Frequenzband und evtl. einen Zeitschlitz in SDMA/TDMA (time division multiple access) Systemen beschrieben wird. Dazu werden sendeseitig, z.B. in Basisstationen von Mobilfunknetzen, adaptive Antennen eingesetzt. Durch diese adaptive Antennen können durch Strahlformung mehrere auf die jeweiligen Position der empfangenden Funkstation, z.B. Mobilstationen von Mobilfunknetzen, abgestimmte Abstrahlungskeulen, d.h. eine Richtcharakteristik, geformt werden, die zur Separierung von Teilnehmersignalen benutzt wird. Die Richtcharakteristik ist jedoch zuvor zu bestimmen.

Die Übertragungsstrecke von einer Basisstation zu einer Mobilstation wird als Anwärtsstrecke und die Übertragungsstrecke von einer Mobilstation zu einer Basisstation wird als Aufwärtsstrecke bezeichnet. Die räumliche Teilnehmerseparierung durch Strahlformung kommt üblicherweise bei der Abwärtsstrecke zum Einsatz.

Eine räumliche Teilnehmerseparierung bringt einen Kapazitätsgewinn in Mobil-Kommunikationssystemen mit sich, da zusätzlich zu anderen Teilnehmerseparierungsverfahren TDMA, FDMA oder CDMA bei gleichbleibender benötigter Bandbreite eine größere Zahl von Kommunikationsverbindungen versorgt werden kann.

Der Erfindung liegt die Aufgabe zugrunde, ein mit geringerem rechentechnischen Aufwand durchführbares Verfahren zur Bestimmung einer Richtcharakteristik einer Funkstation und eine derartige Funkstation anzugeben, die eine zuverlässige räumliche Teilnehmerseparierung sichern. Diese Aufgabe wird durch das Verfahren mit den Merkmalen des Patentanspruchs 1 und die Funkstation mit den Merkmalen nach Patentanspruch 20 gelöst. Vorteilhafte Weiterbildungen sind den Unteransprüchen zu entnehmen.

Erfindungsgemäß ist der Funkstation eine Antenneneinrichtung zugeordnet, wobei die Antenneneinrichtung aus mehreren Einzelstrahlern besteht, über die Sendesignale entsprechend einer in Form und Leistung ausgeprägten Richtcharakteristik abgestrahlt werden. Damit sind Verbindungen zu weiteren Funkstationen durch räumliche Teilnehmerseparierung möglich. Zur Bestimmung der Richtcharakteristik werden:

- ein verbindungsspezifischer Gewichtseinheitsvektor für zumindest eine Verbindung bestimmt, der die Form der Richtcharakteristik beschreibt,
- eine den Gewichtseinheitsvektor bewertende verbindungsspezifische Leistung für die Verbindung bestimmt, die bei der empfangenden Funkstation zu vorgegebenen Übertragungsbedingungen führt, wobei der verbindungsspezifische Gewichtseinheitsvektor einer Länge eins derart ermittelt wird, daß dessen Verwendung die durch diesen Gewichtseinheitsvektor erzeugte Empfangsleistung an der dieser Verbindung zugeordneten weiteren Funkstation maximiert,
- ein individueller Gewichtsvektor durch Verknüpfung des Gewichtseinheitsvektors mit der Leistung bestimmt,
- Sendesignale mit dem Gewichtsvektor zu einzelstrahlerindividuellen Sendesignalen gewichtet, und
- die einzelstrahlerindividuellen Sendesignale über die Einzelstrahler abgestrahlt.

Durch diese Aufteilung der Richtcharakteristik in verbindungsindividuelle Gewichtseinheitsvektoren und Leistungen wird das Strahlformungsproblem vereinfacht und mit vertretbaren Aufwand lösbar gemacht. Die Leistungsbestimmung wird dabei auf die bei der jeweiligen empfangenden Funkstation vorgegebenen Übertragungsbedingungen abgestimmt. Damit wird eine Richtcharakteristik bestimmt, die auch die Einflüsse von Störern und anderen Verbindungen berücksichtigt. Die Maximierung der Empfangsleistung bei den weiteren Funkstationen bewirkt bei guter Trennbarkeit der Funkstationen eine schnelle Konvergenz des Algorithmus. Der Rechenaufwand ist folglich gering. Schlecht trennbare Funkstationen können unterschiedlichen Kanälen zugeordnet werden.

Nach einer vorteilhaften Weiterbildung der Erfindung wird die Bestimmung von Gewichtsvektoren für mehrere Verbindungen durchgeführt, wobei die verbindungsindividuellen Leistungen derart berechnet werden, daß für alle Verbindungen individuelle vorgegebene Übertragungsbedingungen garantiert werden. Damit werden schon bei der Bestimmung der Richtcharakteristik die Übertragungsbedingungen der gesamten Kommunikation in einem Frequenzkanal berücksichtigt, so daß bei Veränderungen des Übertragungskanals einer Funkstation, die übrigen Verbindungen nicht negativ beeinflußt werden. Die vorgebenen Übertragungsbedingungen sind beispielsweise ein minimal einzuhaltender Störabstand an jeder empfangenden weiteren Funkstation.

Es ist weiterhin vorteilhaft, daß der Richtungsvektor aus einer räumlichen Kovarianzmatrix für die Verbindung von der empfangenden Funkstationen berechnet wird. Die räumlichen Kovarianzmatrizen berücksichtigen die Gesamtheit der Kanäle zwischen den Einzelstrahlern und der Position der Mobilstation. Diese Art der Bestimmung des

Gewichtseinheitsvektors bildet die Grundlage für eine robuste Richtcharakteristik für eine Verbindung, die gegenüber kleinen Schätzfehlern nicht anfällig ist. Schätzfehler führen nur zu einer kontinuierlichen Performanceverschlechterung (graceful degradation) und nicht zu abrupten Änderungen. Dies ist in einer Mobilfunkumgebung für die praktische Realisierung besonders wichtig.

Nach einer weiteren vorteilhaften Ausprägung der Erfindung sind die Übertragungsbedingungen durch einen Störabstand und/oder den Rauschpegel bei den empfangenden Funkstationen vorgegeben. Damit werden bei der Leistungsberechnung Gleichkanalinterferenzen durch Störer oder durch andere Verbindungen im gleichen Frequenzkanal, sowie ein Geräterauschen berücksichtigt. Ein zu garantierender Störabstand bildet die Grundlage für eine zuverlässige Detektion von übertragenen Daten bei der empfangenden Funkstation.

Um die Interferenzen auf benachbarte Zellen zu verringern wird vorteilhafterweise die Bestimmung der Gewichtsvektoren für mehrere Verbindungen derart durchgeführt, daß die Summe der Leistungen minimiert wird. Die vorgegebenen Übertragungsbedingung werden trotzdem garantiert. Alternativ kann eine Maximierung der Empfangsleistungen (von Nutzsignalen) bei den empfangenden Funkstationen im Vergleich zum Störpegel vorgesehen sein. Auf Kosten einer vergrößerten Interferenz wird die Detektion erleichtert.

Es ist zweckmäßig, Schätzwerte für den Gewichtseinheitsvektor aus von der Funkstation empfangenen Signalen abzuleiten. Die Schätzwerte können während einer Verbindung gewonnen werden und sind unter der Voraussetzung der räumlichen Reziprozität beider Übertragungsrichtungen immer aktuell. Die Gewichtseinheitsvektoren können mit einem dominanten Eigenvektor einer der Verbindung zugeordneten räumlichen Kovarianzmatrix oder einem dominanten verallgemeinerten Eigenvektor eines Matrixpaares aus einer der Verbindung zugeordneten räumlichen Kovarianzmatrix und einer der Verbindung zugeordneten räumlichen Störkovarianzmatrix gleichgesetzt werden. Dies geschieht während einer Initialisierungsphase der Bestimmung der Richtcharakteristik.

Während der Bestimmung von aktuellen Werten für die Richtcharakteristik wird vorteilhafterweise eine Nachbesserungsprozedur durchgeführt, bei der nur ein einziger Gewichtseinheitsvektor korrigiert wird. Somit läßt sich auch unter Echtzeitbedingungen eine Verbesserung des Ergebnisses mit angemessenen rechentechnischen Aufwand erzielen.

Die angebenen Nachbesserungsprozeduren führen ebenfalls zu einer schnellen Konvergenz. In räumlich gut trennbaren Szenarien führt die Maximierung der Empfangsleistung eines bestimmten Funkstationen nicht automatisch zur Erhöhung der von den anderen Funkstationen empfangenen Interferenz. Im theoretischen Optimalfall ("optimale räumliche Trennbarkeit") stellt für jede Funkstation der dominante Eigenvektor seiner räumlichen Kovarianzmatrix den optimalen Gewichtsvektor für die Strahlformung dar (Sendeleistungsminimierung), der keine Interferenz erzeugt, da er jeweils orthogonal zu den räumlichen Kovarianzmatrizen der anderen Funkstationen ist. Dies bedeutet, daß in räumlich gut trennbaren Szenarien die optimalen Gewichtsvektoren nahe bei den dominanten Eigenvektoren der räumlichen Kovarianzmatrizen liegen und das erfindungsgemäße Verfahren Gewichtsvektoren liefert, die sich bereits nahe dem globalen Optimum des Strahlformungsproblems befinden. Die Nachbesserungsprozedur gemäß den Ansprüchen 16 bis 19 konvergiert daher extrem schnell.

Die Erfindung wird im folgenden anhand von Ausführungsbeispielen bezugnehmend auf zeichnerische Darstellungen näher erläutert.

Dabei zeigen:

Fig. 1 eine schematische Darstellung eines Mobil-Kommunikationssystems,

Fig. 2 eine schematische Darstellung eines Strahlformungsnetzwerks,

Fig. 3 eine schematische Darstellung einer Funkstation,

Fig. 4 ein Ablaufdiagramm eines ersten Ausführungsbeispiels, und

Fig. 5 ein Ablaufdiagramm einer Nachbesserungsprozedur.

Das in FIG 1 dargestellte Mobil-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobil-Vermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Verbindung zu Mobilstationen MS aufbauen kann.

In FIG 1 sind beispielhaft drei Funkverbindungen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Die Funktionaliät dieser Struktur ist auf andere Mobilfunknetze oder Einrichtungen zum drahtlosen Teilnehmeranschluß (d.h. die Gegenstellen der Basisstation sind stationär) übertragbar, in denen die Erfindung zum Einsatz kommen kann.

Die Verbindungen zwischen der Basisstation BS und den Mobilstationen MS unterliegen einer Mehrwegeausbreitung, die durch Reflexionen beispielsweise an Gebäuden oder Bepflanzungen zusätzlich zum direkten Ausbreitungsweg hervorgerufen werden. Geht man von einer Bewegung der Mobilstationen MS aus, dann führt die Mehrwegeausbreitung zusammen mit Einflüssen von Störern dazu, daß bei der empfangenden Basisstation BS sich die Signalkomponenten der verschiedenen Ausbreitungswege eines Teilnehmersignals zeitabhängig überlagern. Weiterhin wird davon ausgegangen, daß sich die Teilnehmersignale verschiedener Mobilstationen MS am Empfangsort zu einem Empfangssignal überlagern.

Zur in Fig. 1 dargestellten Basisstation BS ist eine Antenneneinrichtung AE mit acht Einzelstrahlern zugehörig, die eine adaptive Antenne bilden. Durch eine Strahlformung in der Basisstation BS wird eine räumliche Teilnehmerseparierung durchgeführt. Die Strahlformung wird durch Bestimmung einer Richtcharakteristik für die Abwärtsrichtung durchgeführt.

Ein Netzwerk zur Strahlformung ist in Fig. 2 beispielhaft für zwei Verbindungen mit Sendesignalen s1 und s2 gezeigt. Den Verbindungen sind Gewichtsvektoren w1 und w2 zugeordnet, die mit den Sendesignalen s1 und s2 multipliziert werden, wobei für jeden Einzelstrahler die gewichteten Sendesignale s1 und s2 überlagert, in einem HF-Teil HF-T in hochfrequente Sendesignale umgewandelt und anschließend über M Einzelstrahler abgestrahlt werden. Die Sendesignale s1 und s2 werden im gleichen Frequenzkanal (gleiche Sendefrequenz, ggf. Zeitschlitz und/oder Code) übertragen und werden lediglich räumlich separiert.

Durch die Anwendung verschiedener Gewichtsvektoren w1, w2 für die unterschiedlichen Verbindungen wird eine Abstrahlungscharakteristik der Antenneneinrichtung AE erzeugt, die einen ungestörten Empfang der Sendesignale s1, s2 an den entsprechenden Positionen der Mobilstationen MS gewährleistet. Vorraussetzung für die Einstellung der Gewichtsvektoren w1, w2 ist eine Bestimmung von räumlichen Parametern bezüglich der Übertragungskanäle der einzelnen Verbindungen.

Eine räumliche Separierung von Verbindungen durch Strahlformung scheitert, wenn die Übertragungskanäle der einzelnen Verbindungen nicht ausreichend räumlich trennbar sind, d.h. wenn die Haupteinfallsrichtungen der von ihnen produzierten Signale an der Basisstation BS zu nahe beieinander liegen. Zur quantitativen Beurteilung der „räumlichen Trennbarkeit" werden Informationen über die räumlichen Kanalbedingungen der Signale und dazugehörige Pfaddämpfungen benötigt. Dasselbe gilt für die Bestimmung günstiger Gewichtsvektoren $w_1,.., w_K$, durch welche die räumliche Separierung der einzelnen Verbindungen in der Abwärtsstrecke gewährleistet werden kann. Die räumlichen Parameter lassen sich in Form von räumlichen Kovarianzmatrizen C darstellen.

Eine sehr allgemeine Art, die Aufwärtsstrecke eines Übertragungskanals zu beschreiben, ist durch die über den schnellen Schwund (fast fading) gemittelte räumliche Einfallsleistungsdichte $A_k(\psi,\theta)$ gegeben, wobei der Azimuthwinkel mit $\psi$ und der Elevationswinkel mit $\theta$ bezeichnet ist. Eine Gesamtübertragungsdämpfung $\rho_k$, der logarithmische Quotient zwischen Sendeleistung an der Mobilstation MS des Teilnehmers k und der daraus resultierenden Empfangsleistung an jedem Einzelstrahler der Basisstation BS, läßt sich durch folgenden Zusammenhang aus der Einfallsrichtungsdichte $A_k(\psi,\theta)$ ermitteln:

$$10^{\rho_k/10dB} = \int_{-\pi}^{+\pi}\int_{-\pi/2}^{+\pi/2} A_k(\psi,\theta)\,d\theta\,d\psi \qquad (1)$$

Bei schmalbandiger Abwärtsstrahlformung, siehe Fig. 2, sind sowohl für die Beurteilung der räumlichen Trennbarkeit in der Abwärtsstrecke als auch für die Berechung der Gewichtsvektoren $w_1,.. w_K$ lediglich die über die schnellen Schwunderscheinungen gemittelten räumlichen Kovarianzmatrizen $C_1,.., C_K$ relevant. Die räumliche Kovarianzmatix $C_k$ dient der räumlichen Beschreibung der zum Teilnehmer k gehörigen Abwärtsstrecke, also des Übertragungskanals von der Basisstation BS zur Mobilstation MS. Ausreichende räumliche Reziprozität der Übertragungsrichtung ist hierbei angenommen. Die Frequenzen der Abwärts- und Aufwärtsstrecke sind zumindest in etwa identisch oder führen zu ähnlichen Ausbreitungsbedingungen, so daß Gruppenantworten (steering vector, array response vector) in der Abwärtsstrecke in etwa gleich denen in der Aufwärtsstrecke sind.

Die räumliche Kovarianzmatix $C_k$ wird durch folgende Gleichung beschrieben:

$$C_k = \int_{-\pi}^{+\pi}\int_{-\pi/2}^{+\pi/2} A_k(\psi,\theta)\,a(\psi,\theta)\,a^H(\psi,\theta)\,d\theta\,d\psi \qquad (2)$$

Dabei bezeichnet $a(\varphi,\theta)$ die Gruppenantwort der Antenneneinrichtung AE beim Empfang einer Wellenfront.

Fig. 3 zeigt eine Einrichtung, die die Bestimmung der Richtcharakteristik vornimmt. Dazu werden Meßwerte der Einzelstrahler der Antenneneinrichtung AE bezüglich von Empfangssignalen rx in einer Übertragungseinrichtung UE ausgewertet. Nach einer Verstärkung, Basisbandübertragung und Analog/Digital-Wandlung stehen einer digitalen Signalverarbeitungseinrichtung SP digitalisierte Eingangswerte der Empfangssignale zur Verfügung. Diese Eingangswerte und weitere verbindungsindividuelle Parameter (vorgegebene Werte für Störabstand SNIR, Rauschanteil N bei den Mobilstationen und räumliche Kovarianzmatrizen C bezüglich der Übertragungskanäle in Abwärtsrichtung), sowie Programme und Daten zur Durchführung der nachfolgenden Algorithmen sind in Speichermitteln MEM gespeichert. Die Einrichtung zur Bestimmung der Richtcharakteristik ist in einer Basisstation BS angeordnet.

Eine Abwärtssendeleistung der Basisstation BS bei der Antenneneinrichtung AE ist proportional der Summe

$$P = \sum_{k=1}^{K} w_k^H w_k \ . \qquad (3)$$

Eine Empfangsleistung, die vom Gewichtsvektor $w_l$ erzeugt worden ist und an einer Antenne der k-ten Mobilstation MS empfangen wird, ist proportional zu

$$S_{kl} = w_l^H C_k w_l \ . \qquad (4)$$

Es wird weiterhin angenommen, daß auch wenn die Basisstation BS nicht sendet, an der Antenne der k-ten Mobilstation MS eine Störleistung $N_k$ meßbar ist, die aus geräteinternen Störungen und einer Gleichkanalinterferenz aus anderen Mobilfunkzellen herrührt.

Das Problem der Bestimmung der Richtcharakteristik kann daher so definiert werden, daß die Gewichtsvektoren $w_1..w_K$ in einer Weise bestimmt werden sollen, daß

- die Abwärtssendeleistung an der Antenneneinrichtung AE der Basisstation BS minimiert wird, und
- an den Mobilstationen MS der K Teilnehmer der Störabstand $SNIR_k$ nicht überschritten wird.

Folgendes nebenbedingungsbehaftete Problem ist folglich zu lösen:
minimiere

$$\left\{ \sum_{k=1}^{K} w_k^H w_k \right\}$$

für alle $w_k$ mit den K Nebenbedingungen,
daß

$$\frac{w_k^H C_k w_k}{SNIR_k} \geq N_k + \sum_{l=1, l\neq k}^{K} w_l^H C_k w_l \quad \text{für alle } k=1..K. \qquad (5)$$

Der bei der Strahlformung (siehe Fig. 2) zu verwendende Gewichtsvektor $w_k$ wird dabei in einen Gewichtseinheitsvektor $u_k$ und eine Leistung $P_k$ nach folgender Gleichung zerlegt:

$$w_k = \sqrt{P_k} u_k \ , \qquad (6)$$

mit

$$Pk > 0 \text{ und } \|u_k\| = 1. \qquad (7)$$

Dabei beschreibt der Gewichtseinheitsvektor $u_k$ die Form der Richtcharakteristik und die Leistung $P_k$ einen Faktor zur Bewertung der Form jedes einzelnen Gewichtsvektors $w_k$. Durch die Aufteilung verringert sich der Rechen-

aufwand in hohem Maße. Damit wird das komplizierte Strahlformungsproblem in kleinere Einzelprobleme unterteilt, die jedes für sich beherrschbar sind.

Fig.4 zeigt ein Ablaufdiagramm der Prozedur zur Bestimmung der Richtcharakterstik, dabei wird im Schritt 1 verbindungsindividuell die räumliche Kovarianzmatix $C_k$, der Störabstand $SNIR_k$ und der Rauschanteil $N_k$ vorgegeben. Die Werte $SNIR_k$ und $N_k$ werden von den Mobilstationen MS signalisiert, die räumliche Kovarianzmatix $C_k$ wird beispielsweise nach der Patentanmeldung DE 197 37 365 berechnet. Die einzuhaltenden Störabstände $SNIR_k$ können alternativ auch zellen- oder netzweit fest festgelegt werden.

Der Schritt 2 beinhaltet eine Initialisierungsprozedur, bei der drei Varianten sinnvoll sind:

1) Die Gewichtseinheitsvektoren $u_k$ werden gleich den dominanten Eigenvektoren $\tilde{u}(C_1)..\tilde{u}(C_K)$ der entsprechenden räumlichen Kovarianzmatrix $C_1..C_K$ gesetzt. Damit sind die Gewichtseinheitsvektoren $u_k$ derart gewählt, daß sie jeweils die von jeder Mobilstation MS empfangene Nutzleistung maximieren:

$$u_k = \arg_u\{\max\{S_{k,k} = u^H C_k u\}\forall\|u\| = 1\}. \tag{8}$$

2) Die Gewichtseinheitsvektoren $u_k$ werden gleich den dominanten verallgemeinerten Eigenvektoren $\tilde{u}(C_1,\overline{C}_1)..\tilde{u}(C_K,\overline{C}_K)$ der Matrixpaare $(C_1,\overline{C}_1)..(C_K,\overline{C}_K)$ gesetzt, wobei die zur Mobilstation MS gehörige räumlichen Störkovarianzmatrix $\overline{C}_k$ wie folgt definiert ist:

$$\overline{C}_k = -C_k + \sum_{l=1}^{K} C_l = \sum_{l=1, l\neq k}^{K} C_l . \tag{9}$$

Damit werden entsprechend der zweiten Variante die Gewichtseinheitsvektoren $u_k$ so gewählt, daß sie jeweils das Verhältnis aus der vom Gewichtsvektor $w_k$ produzierten Nutzleistung zur Störleistung maximieren:

$$u_k = \arg_u\left\{\max\left\{\frac{S_{k,k}}{\sum_{l=1, l\neq k}^{K} S_{l,k}} = \frac{u^H C_k u}{u^H \overline{C}_k u}\right\}\forall\|u\| = 1\right\}. \tag{10}$$

3) In einer dritten Variante werden die Varianten 1) und 2) ausgeführt, jedoch später nur der Satz von Gewichtseinheitsvektoren $u_k$ ausgewählt, der in einer geringeren Abwärtssendeleistung P resultiert.

In einem dritten Schritt 3 findet die Berechnung der Leistungen $P_k$ statt. Durch Einsetzen von (6) in (5) und Wahl des Gleichheitszeichens in der Nebenbedingung von (5) ergibt sich ein K x K Gleichungssystem

$$\Psi p = 1 \Leftrightarrow \begin{bmatrix} \frac{u_1^H C_1 u_1}{N_1 SNIR_1} & .. & -\frac{u_K^H C_1 u_K}{N_1} \\ .. & .. & .. \\ -\frac{u_1^H C_K u_1}{N_K} & .. & \frac{u_K^H C_K u_K}{N_K SNIR_K} \end{bmatrix} \cdot \begin{bmatrix} P_1 \\ .. \\ P_K \end{bmatrix} = \begin{bmatrix} 1 \\ 1 \\ 1 \end{bmatrix}. \tag{11}$$

Die Lösung des Gleichungssystems liefert die Leistungen $P_1..P_K$. Die Gewichtsvektoren $w_k$ sind nun aus (6) berechenbar. Die Abwärtssendeleistung P ist dabei

$$P = \sum_{k=1}^{K} P_k . \tag{12}$$

Existiert keine (eindeutige) Lösung von (11) oder ist ein Wert der Leistungen $P_1..P_K$ kleiner oder gleich Null, so wird die Abwärtssendeleistung P formal auf unendlich gesetzt.

Im Schritt 4 erfolgt eine Abfrage, ob eine Nachbesserungsprozedur (Schritt 5) gestartet oder wiederholt werden soll. Vorteilhafte Abfragekriterien für die Wiederholung sind:

- die Güte der bereits gefunden Lösung für die Gewichtsvektoren $w_K$ (Güte ausreichend),
- die Anzahl der bereits durchlaufenen Schleifen der Nachbesserung (z.B. Anzahl > 3), oder
- die Änderung der Abwärtssendeleistung P seit dem letzten Durchlauf (z.B. $\Delta P/P < 1$ dB).

Im Schritt 6 erfolgt die Ausgabe der Gewichtsvektoren $w_k$ für eine anschließende Strahlformung.

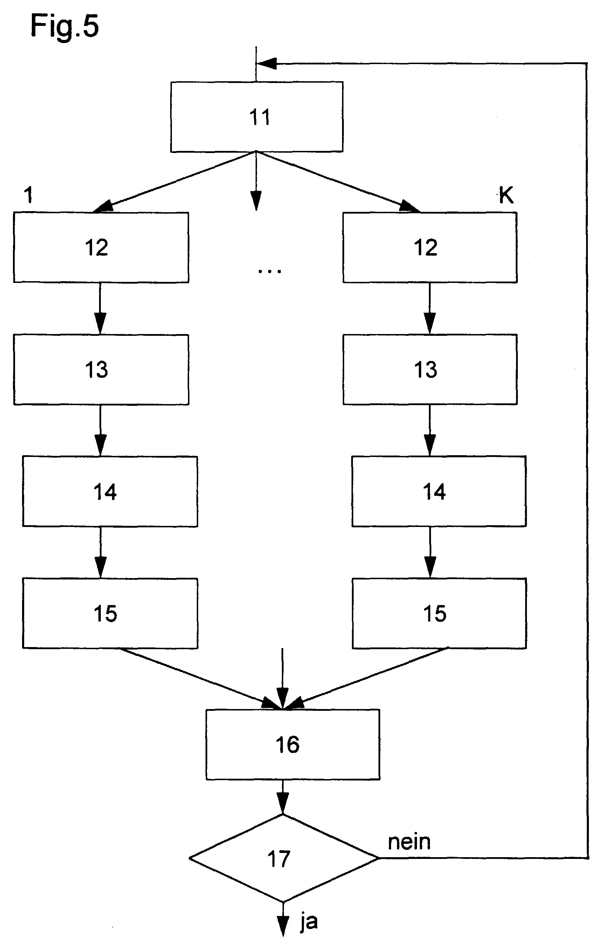

Die Nachbesserungsprozedur ist anhand von Fig. 5 detaillierter gezeigt.

Wird der Zusammenhang

$$P = \sum_{k=1}^{K} \|w_k\|^2 = \sum_{k=1}^{K} P_k = \|\Psi^{-1} 1\|_s = \|\Psi^{-1}\|_s \quad (13)$$

in das Strahlformungproblem nach (5) eingesetzt, läßt sich dieses in das folgende nebenbedingungsbehaftete Minimierungsproblem umformulieren:
minimiere $\{\|\Psi^{-1}\|_s\}$ für alle $u_K$ mit den K Nebenbedingungen, daß

$$\|u_1\| = \ldots = \|u_K\| = 1 \text{ und } \Psi^{-1} 1 = p \in R_+^K . \quad (14)$$

Die Grundidee der Nachbesserungsprozedur ist, daß Problem (14) mit einer reduzierten Anzahl von Freiheitsgraden zu lösen. Nur ein einziger Richtungsvektor $u_i$ wird optimiert, wobei die K-1 anderen konstant bleiben. Die dramatische Vereinfachung des ursprünglichen SDMA-Strahlformungsproblems kommt dadurch zustande, das für jeden beliebigen Index i=1..K die in (14) definierte Kostenfunktion $\|\Psi^{-1}\|_s$ folgendermaßen dargestellt werden kann:

$$\|\Psi^{-1}\|_s = f_i(u_i) = \frac{u_i^H B_i u_i}{u_i^H A_i u_i} , \quad (15)$$

wobei die Matrizen $A_i$ und $B_i$ keine Funktionen von ui sind. Die Minimierung der Kostenfunktion $f_i(u_i)$ stellt sich demnach als verallgemeinertes Eigenwertproblem dar, da der Quotient in (15) durch den dominanten verallgemeinerten Eigenvektor $\tilde{u}(A_i,B_i)$ des Matrixpaares $(A_i,B_i)$ minimiert wird. Die Berechnung des dominanten verallgemeinerten Eigenvektors $\tilde{u}(A_i,B_i)$ ist Schritt 14 in Fig. 5.

Darüberhinaus läßt sich nachweisen, daß die Matrix $B_i$ stets invertierbar ist, so daß das verallgemeinerte Eigenwertproblem (15) in ein (reguläres) Eigenwertproblem übergeht. Der Gewichtseinheitsvektor $u_i$ , der die Kostenfunktion $f_i(u_i)$ minimiert, ergibt sich (Schritt 13) daher als dominanter (regulärer) Eigenvektor eines Matrixproduktes:

$$u_i = \arg_{u_i}\left\{\max\left\{f_i(u_i) = \frac{u_i^H B_i u_i}{u_i^H A_i u_i}\right\} \forall \|u\| = 1\right\} = \tilde{u}(B_i^{-1} A_i). \quad (16)$$

Zur Berechnung der Matrizen $A_i$ und $B_i$ greift man auf den folgenden Zusammenhang zurück, der direkt aus der Berechnungsvorschrift einer Matrixinversen mit Hilfe von adjungierten Matrizen folgt:

$$\|\Psi^{-1}\|_s = |\Psi^{-1}| \sum_{m=1}^{K} \sum_{n=1}^{K} (-1)^{m+n} |\Psi(m;n)|. \quad (17)$$

Wird die Definition der Matrix $\Psi$ aus (11) in (17) eingesetzt, so erhält (Schritt 12) man:

$$Ai = \sum_{k=1}^{K} a_{k,i} C_k \text{ und } B_i = b_{0,i} I + \sum_{k=1}^{K} b_{k,i} C_k \,. \qquad (18)$$

Unter Verwendung der Abkürzungen

$$\alpha(k,i) = \begin{Bmatrix} (N_k SNIR)^{-1} \\ (-1)^{k+i+1} N_k^{-1} \end{Bmatrix} \begin{matrix} falls & k = i \\ sonst & \end{matrix} \quad \text{und} \quad \text{sgn}(x) = \begin{Bmatrix} +1 & falls & x > 0 \\ 0 & falls & x = 0 \\ -1 & falls & x < 0 \end{Bmatrix}$$

(19)

ergeben sich die in (18) verwendeten (reellen) Koeffizienten $a_{1,i}..a_{K,i}$ und $b_{0,i}..b_{K,i}$ zu:

$$a_{k,i} = \alpha(k,i)|\Psi(k;i)| \text{ für alle } k = 1..K \qquad (20)$$

$$b_{0,i} = \sum_{m=1}^{K} (-1)^{m+1} |\Psi(m;i)|$$

$$b_{k,i} = \alpha(k,i) \sum_{m=1}^{K} \sum_{n=1}^{K} (-1)^{m+n} \text{sgn}((m-k)(n-i)) |\Psi(m,k;n,i)| \text{ für alle } k = 1..K$$

Nach der Ausführung der Nachbesserungsprozedur nach (16), (18), (19) und (20) für alle Indizes i=1..K ergibt sich für jeden Index i jeweils ein verbesserter Gewichtseinheitsvektor $u_i$ und ein Wert $f_i(u_i)$ für die Kostenfunktion (Schritt 15). Ist für einen Index i die Nebenbedingung $p \in R^K_+$ nicht erfüllt, erhält die entsprechendende Kostenfunktion $f_i(u_i)$ den Wert unendlich.

Der kleinste Wert der Kostenfunktion bestimmt den besten Index iopt. Der ursprüngliche Gewichtseinheitsvektor $u_{iopt}$ wird durch den verbesserten Gewichtseinheitsvektor $u_{iopt}$ ersetzt (Schritt 16). Abschließend erfolgt wiederum die Berechnung der Gewichtsvektoren $w_k$ mit k=1..K nach Schritt 2 und 3 von Fig. 4.

Die Nachbesserungsprozedur kann beliebig oft durchgeführt (Schritt 17) werden. Bei jeder Wiederholung darf jedoch auf die Ausführung für den Index i=iopt aus der vorhergehenden Prozedur verzichtet werden.

Weiterhin kann die Nachbesserungsprozedur auch dann auf die in der Initialisierungprozedur berechneten Gewichtseinheitsvektoren $u_k$ angewendet werden, wenn die Leistungsberechnung für diese Vektoren gescheitet ist.

## Patentansprüche

1. Verfahren zur Bestimmung einer Richtcharakteristik einer Funkstation (BS) mit einer Antenneneinrichtung (AE) für Funkverbindungen zu weiteren Funkstationen (MS),
wobei die Antenneneinrichtung (AE) aus mehreren Einzelstrahlern (1, 2,..M) besteht, über die Sendesignale ($tx_m$) entsprechend einer in Form und Leistung ausgeprägten Richtcharakteristik abgestrahlt werden, bei dem

    - ein verbindungsspezifischer Gewichtseinheitsvektor ($u_k$) für zumindest eine Verbindung bestimmt wird, der die Form der Richtcharakteristik beschreibt, wobei der verbindungsspezifische Gewichtseinheitsvektor ($u_k$) einer Länge eins derart ermittelt wird, daß dessen Verwendung die durch diesen Gewichtseinheitsvektor ($u_k$) erzeugte Empfangsleistung ($S_{kk}$) an der dieser Verbindung zugeordneten weiteren Funkstation (MS) maximiert,
    - eine den Gewichtseinheitsvektor ($u_k$) bewertende verbindungsspezifische Leistung ($P_k$) für die Verbindung bestimmt wird, die bei der empfangenden Funkstation (MS) zu vorgegebenen Übertragungsbedingungen ($SNIR_k$) führt,
    - ein individueller Gewichtsvektor ($w_k$) durch Verknüpfung des Gewichtseinheitsvektors ($u_k$) mit der Leistung ($P_k$) bestimmt wird,
    - Sendesignale (tx) mit dem Gewichtsvektor ($w_k$) zu einzelstrahlerindividuellen Sendesignalen ($tx_m$) gewichtet werden, und

- die einzelstrahlerindividuellen Sendesignale ($tx_m$) über die Einzelstrahler (1, 2,..M) abgestrahlt werden.

**2.** Verfahren nach Anspruch 1, bei dem die Bestimmung der verbindungsspezifischen Sendeleistungen ($P_1$..$P_k$) durch Lösung eines linearen Gleichungssystems durchgeführt wird, wobei im zeitlichen Mittel die an der Antenneneinrichtung (AE) abgestrahlte Gesamtsendeleistung (P) minimal ist.

**3.** Verfahren nach Anspruch 1 oder 2, bei dem

die Bestimmung von Gewichtsvektoren ($w_k$) für mehrere Verbindungen durchgeführt wird, wobei die verbindungsindividuellen Leistungen ($P_k$) derart berechnet werden, daß für alle Verbindungen individuelle vorgegebene Übertragungsbedingungen ($SNIR_k$) eingehalten werden.

**4.** Verfahren nach einem der Ansprüche 1 bis 3, bei dem

verbindungsspezifische Kanalparameter in Form räumlicher Kovarianzmatrizen oder in Form von Parametern, aus denen sich die verbindungsspezifischen räumlichen Kovarianzmatrizen berechnen lassen vorliegen, und
ein verbindungsspezifischer Einheitsvektor ($u_k$) auf die Weise ermittelt wird, daß ein dominanter Eigenvektor der dieser Verbindung zugeordneten räumlichen Kovarianzmatrix ($C_k$) berechnet wird, und dieser Eigenvektor auf die Länge eins normiert wird.

**5.** Verfahren nach einem der vorherigen Ansprüche, bei dem

Schätzwerte für die verbindungsspezifischen Kanalparameter aus an der Funkstation (BS) empfangenen Signalen abgeleitet werden.

**6.** Verfahren nach einem der vorherigen Ansprüche, bei dem

die vorgegeben Übertragungsbedingungen durch den Wert eines Störabstands ($SNIR_k$) und/oder eines Rauschpegels ($N_k$) bei den empfangenden Funkstationen (MS) definiert sind.

**7.** Verfahren nach einem der vorherigen Ansprüche, bei dem

die Bestimmung der Gewichtsvektoren ($w_k$) für mehrere Verbindungen derart durchgeführt wird, daß die Nutzempfangsleistungen ($S_k$) bei den empfangenden Funkstationen (MS) im Vergleich zum Störpegel (I, N) maximiert werden.

**8.** Verfahren nach einem der vorherigen Ansprüche, bei dem

Schätzwerte für den Gewichtseinheitsvektor ($u_k$) aus von der Funkstation (BS) empfangenen Signalen abgeleitet werden.

**9.** Verfahren nach 8, bei dem

der Gewichtseinheitsvektor ($u_k$) mit einem dominanten Eigenvektor einer der Verbindung zugeordneten räumlichen Kovarianzmatrix ($C_k$) gleichgesetzt wird.

**10.** Verfahren nach Anspruch 8, bei dem

der Gewichtseinheitsvektor ($u_k$) mit einem dominanten verallgemeinerten Eigenvektor eines Matrixpaares aus einer der Verbindung zugeordneten räumlichen Kovarianzmatrix ($C_k$) und
einer der Verbindung zugeordneten räumlichen Störkovarianzmatrix ($\overline{C}k$) gleichgesetzt wird.

**11.** Verfahren nach Anspruch 9 und 10, bei dem

der Gewichtseinheitsvektor ($u_k$) ausgewählt wird, der die geringere Leistung ($P_k$) für die Verbindung benötigt.

**12.** Verfahren nach einem der vorherigen Ansprüche, bei dem

die Leistungen ($P_k$) nach folgendem Gleichungssystem:

$$\begin{bmatrix} \frac{u_1^H C_1 u_1}{N_1 SNIR_1} & .. & -\frac{u_K^H C_1 u_K}{N_1} \\ .. & .. & .. \\ -\frac{u_1^H C_K u_1}{N_K} & .. & \frac{u_K^H C_K u_K}{N_K SNIR_K} \end{bmatrix} \cdot \begin{bmatrix} P_1 \\ .. \\ P_K \end{bmatrix} = \begin{bmatrix} 1 \\ 1 \\ 1 \end{bmatrix}$$

berechnet werden, wobei mit $C_k$ verbindungsindividuelle räumliche Kovarianzmatrizen beschrieben werden.

**13.** Verfahren nach einem der vorherigen Ansprüche, bei dem

nach Bestimmung der Gewichtsvektoren ($w_k$) zumindest ein Durchlauf einer Nachbesserungsprozedur durchgeführt wird,
wobei nur ein einziger Gewichtseinheitsvektor ($u_k$) korrigiert wird.

**14.** Verfahren nach Anspruch 13, bei dem

die Nachbesserungsprozedur abgebrochen wird, sobald ein Durchlauf eine Verringerung der Leistung ($P_k$) erzielt, die kleiner einem Schwellwert ist.

**15.** Verfahren nach einem der vorherigen Ansprüche, bei dem

- verbindungsspezifische Ersatzgewichtsvektoren durch die Multiplikation von verbindungsspezifischen Ersatzeinheitsvektoren und verbindungsspezifischen Ersatzübertragungsfaktoren erzeugt werden,
- ein verbindungsspezifischer Ersatzeinheitsvektor derart ermittelt wird, daß dessen Verwendung als Gewichtsvektor das Verhältnis der durch diesen Gewichtsvektor an der dieser Verbindung zugeordneten weiteren Funkstation (MS) erzeugten Empfangsleistung ($S_{kk}$) und der Summe der an den weiteren Funkstationen (MS) erzeugten Empfangsleistungen maximiert,
- der Ersatzeinheitsvektor auf die Länge eins normiert wird,
- die verbindungsspezifischen Ersatzübertragungsfaktoren in der Weise bestimmt werden, daß im zeitlichen Mittel sowohl die an der Antenneneinrichtung abgestrahlte Ersatzsendeleistung minimal ist, als auch an keiner der weiteren Funkstationen (MS) ein verbindungsspezifischer Störabstand ($SNIR_1..SNIR_K$) unterschritten wird, wobei die verbindungsspezifischen Ersatzeinheitsvektoren konstant gehalten werden, und
falls die Ersatzsendeleistung kleiner als die Sendeleistung (P) ist, die Sendeleistung (P), die verbindungsspezifischen Einheitsvektoren ($u_1..u_K$) und die verbindungsspezifischen Übertragungsfaktoren ($v_1..v_K$) durch die Ersatzsendeleistung, die verbindungsspezifischen Ersatzeinheitsvektoren bzw. die verbindungsspezifischen Ersatzübertragungsfaktoren ersetzt werden.

**16.** Verfahren nach einem der vorherigen Ansprüche, bei dem

eine Nachbesserungsprozedur durchgeführt wird, bei der eine bestimmte Verbindung (k) ausgewählt wird, und sowohl neue verbindungsspezifische Übertragungsfaktoren als auch der der ausgewählten Verbindung (k) zugeordnete neue verbindungsspezifische Einheitsvektor in der Weise bestimmt werden, daß im zeitlichen Mittel sowohl die an der Antenneneinrichtung (AE) abgestrahlte neue Sendeleistung minimal ist, als auch an keiner der weiteren Funkstationen (MS) ein verbindungsspezifischer Störabstand ($SNIR_1..SNIR_K$) unterschritten wird, wobei nur die nicht ausgewählten verbindungsspezifischen Einheitsvektoren konstant gehalten werden,
der neue verbindungsspezifische Einheitsvektor auf die Länge eins normiert wird, und
falls die neue Sendeleistung kleiner als die Sendeleistung (P) ist, die Sendeleistung (P), der ausgewählte verbindungsspezifische Einheitsvektor ($u_k$) und die verbindungsspezifischen Übertragungsfaktoren ($v_1..v_K$) durch die neue Sendeleistung, den ausgewählten neuen verbindungsspezifischen Einheitsvektor bzw. die neuen verbindungsspezifischen Übertragungsfaktoren ersetzt werden.

**17.** Verfahren nach Anspruch 16, bei dem

zur Gewinnung des neuen verbindungsspezifischen Einheitsvektors ein verallgemeinertes Eigenwertproblem gelöst wird oder alternativ ein lineares Gleichungssystem und anschließend ein Eigenwertproblem gelöst werden, und

die Bestimmung der neuen verbindungsspezifischen Ersatzübertragungsfaktoren durch die Lösung eines linearen Gleichungssystems erfolgt.

**18.** Verfahren nach einem der Ansprüche 16 oder 17, bei dem

eine Verbesserungsiteration auf die Weise durchgeführt wird, daß genausoviele Nachbesserungsprozeduren separat ausgeführt werden, wie Verbindungen existieren, wobei im ersten Schritt jeder Nachbesserungsprozedur eine andere Verbindung (k) ausgewählt wird, und
die Ersetzung der Sendeleistung (P), der Übertragungsfaktoren ($v_1$..$v_K$) und eines Einheitsvektors ($u_k$) abschließend nur für diejenige Nachbesserungsprozedur durchgeführt wird, die die niedrigste neue Sendeleistung ergeben hat.

**19.** Verfahren nach einem der Ansprüche 16 bis 18, bei dem

keine Nachbesserungsprozedur mehr durchgeführt wird, sobald sich eine Sendeleistung ergibt, die sich unterhalb eines vorbestimmten Schwellwerts befindet.

**20.** Funkstation,

mit einer Antenneneinrichtung (AE), wobei die Antenneneinrichtung (AE) aus mehreren Einzelstrahlern (1, 2, .. M) besteht, über die Sendesignale ($tx_m$) entsprechend einer in Form und Leistung ausgeprägten Richtcharakteristik abgestrahlt werden,
mit Signalverarbeitungseinrichtung (SP) zum

- Bestimmen eines verbindungsspezifischen Gewichtseinheitsvektors ($u_k$) für zumindest eine Verbindung, der die Form der Richtcharakteristik beschreibt, wobei der verbindungsspezifische Gewichtseinheitsvektor ($u_k$) einer Länge eins derart ermittelt wird, daß dessen Verwendung die durch diesen Gewichtseinheitsvektor ($u_k$) erzeugte Empfangsleistung ($S_{kk}$) an der dieser Verbindung zugeordneten weiteren Funkstation (MS) maximiert,
- Bestimmen einer den Gewichtseinheitsvektor ($u_k$) bewertenden verbindungsspezifischen Leistung ($P_k$) für die Verbindung, die bei der empfangenden Funkstation (MS) zu vorgegebenen Übertragungsbedingungen ($SNIR_k$) führt,
- Bestimmen eines individuellen Gewichtsvektors ($w_k$) durch Verknüpfung des Gewichtseinheitsvektors ($u_k$) mit der Leistung ($P_k$),

mit einer Übertragungseinrichtung (UE) zum

- Wichten der Sendesignale (tx) mit dem Gewichtsvektor ($w_k$) zu einzelstrahlerindividuellen Sendesignalen ($tx_m$), die über die Einzelstrahler (1, 2,..M) abgestrahlt werden.

Fig.1

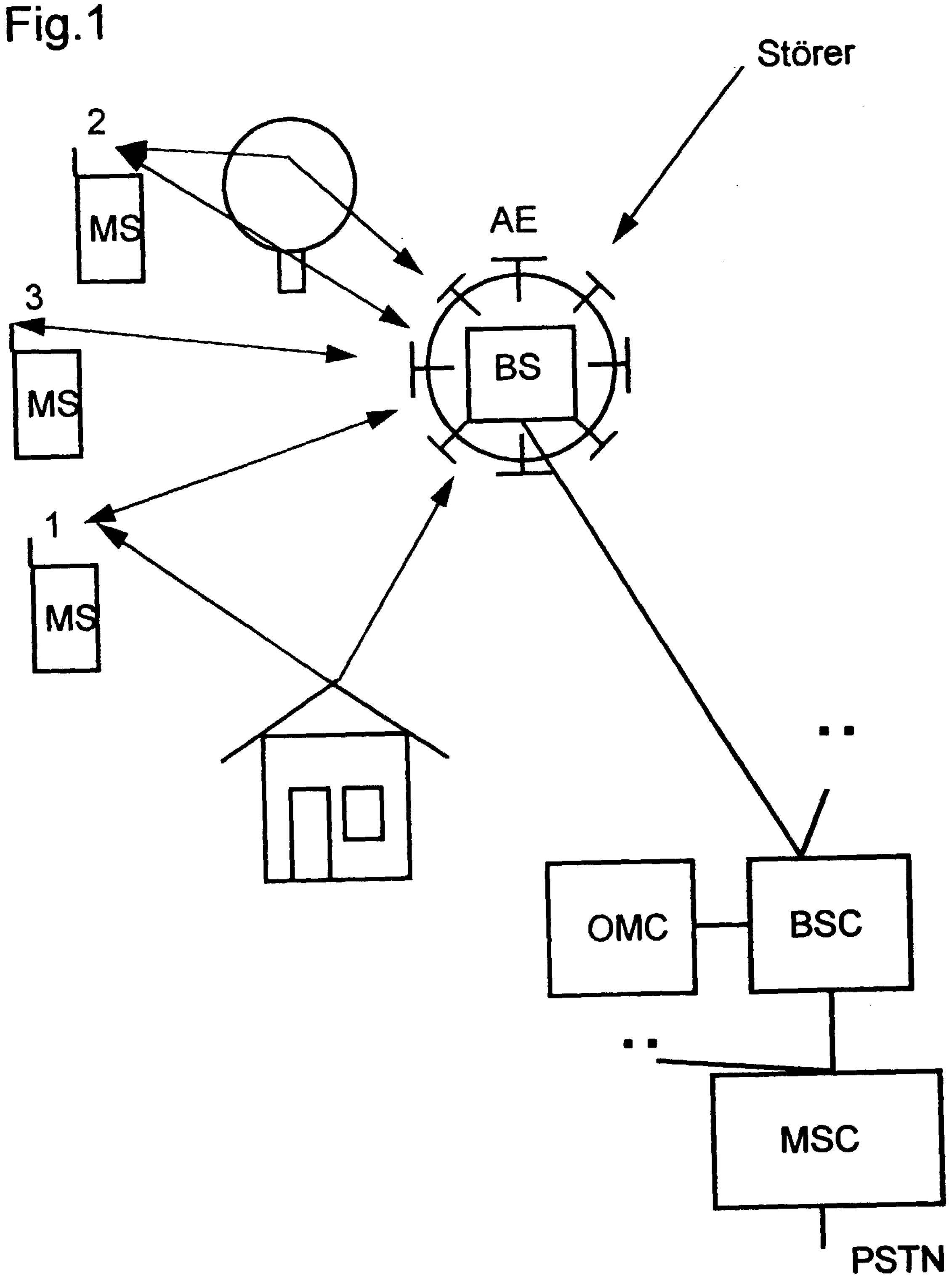

Fig.2

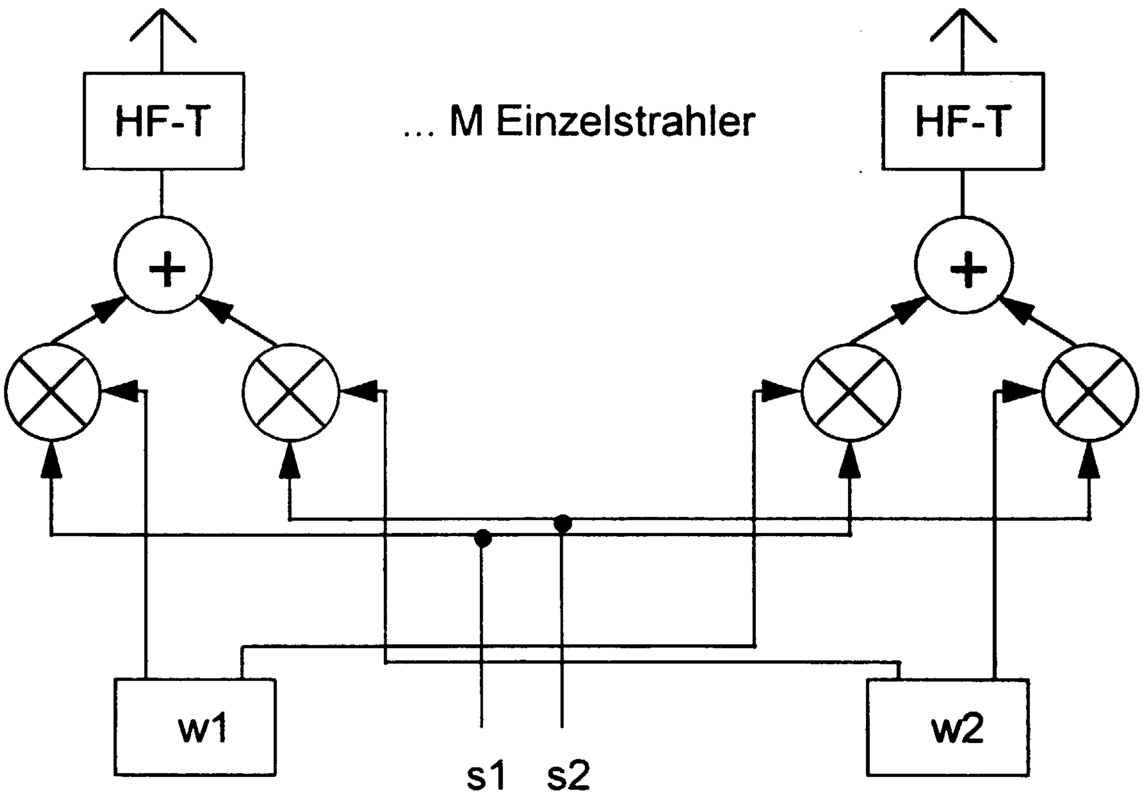


Fig.3

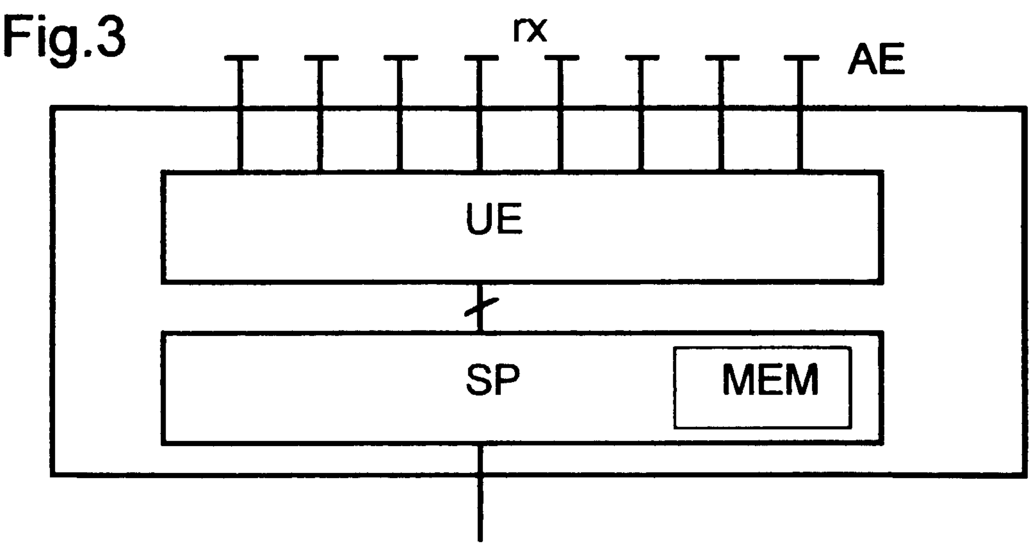

Fig.4

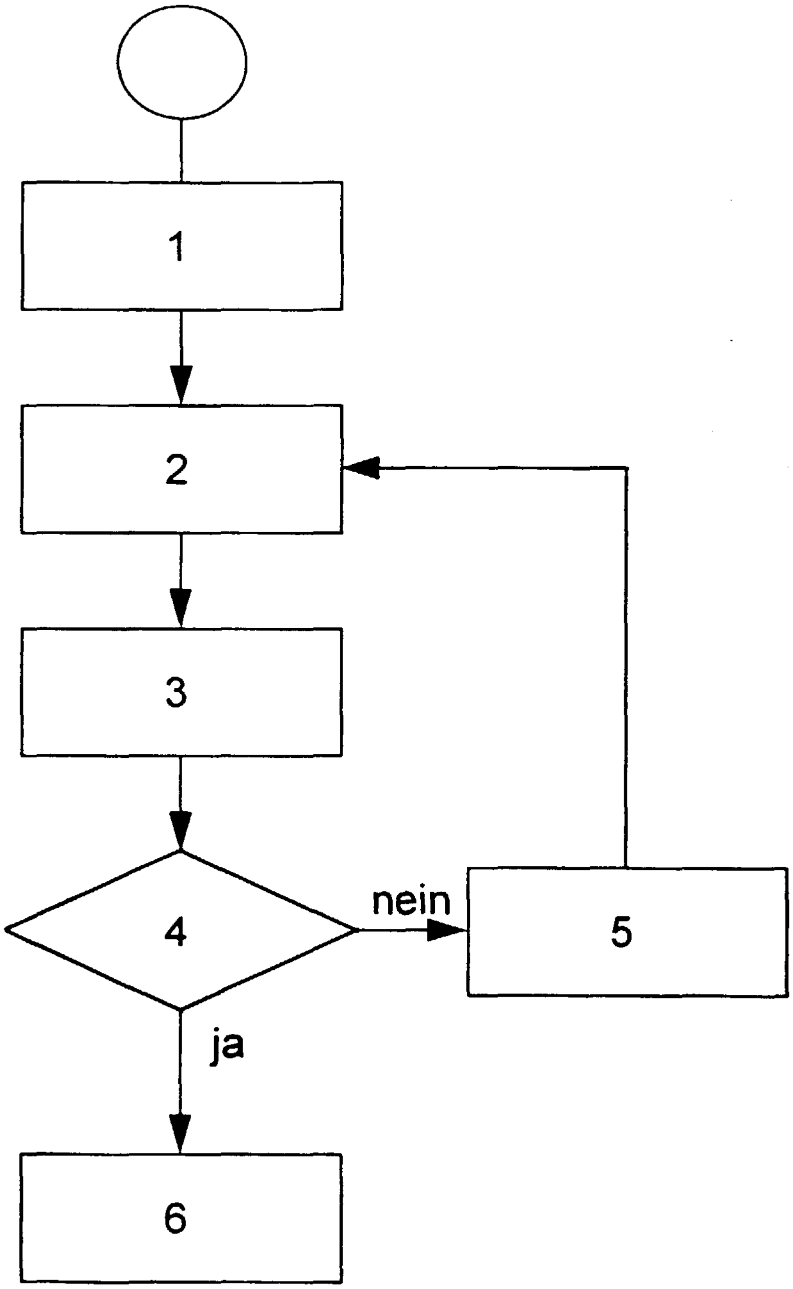

Fig.5